# EUROPÄISCHE PATENTSCHRIFT

(11) **EP 2 553 516 B1**
(45) Veröffentlichungstag und Bekanntmachung des Hinweises auf die Patenterteilung: **12.11.2014**
(21) Anmeldenummer: 11711033.8
(22) Anmeldetag: 19.03.2011
(51) Int. Cl.: G02B 27/01, G09G 5/00

(54) **VORRICHTUNG ZUR ANZEIGE VON INFORMATIONEN IN EINEM KRAFTFAHRZEUG**
APPARATUS FOR DISPLAYING INFORMATION IN A MOTOR VEHICLE
DISPOSITIF D'AFFICHAGE D'INFORMATIONS DANS UN VÉHICULE À MOTEUR

(30) Priorität: 29.03.2010 DE 102010013241
(43) Veröffentlichungstag der Anmeldung: 06.02.2013
(73) Patentinhaber: Audi AG, 85045 Ingolstadt (DE)
(72) Erfinder: HELOT, Jacques, 80801 München (DE); KETS, Wouter, 85049 Ingolstadt (DE); BEIERLEIN, Ulrich, 85051 Ingolstadt (DE); MERK, Imanuel, 22.251-040 Botafogo, Rio de Janeiro (BR)
(74) Vertreter: Brandt, Kai
(86) Internationale Anmeldenummer: PCT/EP2011/001350
(87) Internationale Veröffentlichungsnummer: WO 2011/120638

(56) Entgegenhaltungen:
- WO-A1-98/28649
- DE-A1-102004 007 802
- DE-U1- 29 703 659

## Beschreibung

Die Erfindung betrifft eine Vorrichtung zur Anzeige von Informationen in einem Kraftfahrzeug mit wenigstens zwei Anzeigeeinrichtungen nach der im Oberbegriff von Anspruch 1 näher definierten Art.

Eine gattungsgemäße Vorrichtung zur Anzeige von Informationen in einem Kraftfahrzeug ist aus der DE 297 03 659 U1 bekannt. Dabei sind eine herkömmliche Anzeigevorrichtung bzw. ein Rückprojektionsdisplay mit einem Head-Up-Display so kombiniert, dass eine kombinierte Anzeigevorrichtung zur Darstellung von Informationen gebildet wird. Des weiteren können beide Anzeigeeinrichtungen gemeinsam als eine Einheit angesteuert und genutzt werden.

Ähnliche Vorrichtungen sind außerdem aus der WO 98/28649 A1 und der DE 10 2004 007 802 A1 bekannt.

Die DE 10 2007 053 421 A1 beschreibt eine Antenneneinrichtung zum Verbinden mit einer Recheneinrichtung und einer Projektionseinrichtung zur Erzeugung eines virtuellen Bildes.

Eine weitere Anzeigevorrichtung für ein Kraftfahrzeug mit einer Instrumententafel, die insgesamt drei Displays umfasst, ist in der DE 10 2005 026 787 A1 beschrieben. Die Displays sind derart angeordnet, dass sich die vom Betrachter optisch erfassbaren Informationsbereiche zu einem gemeinsamen, vergrößerten Informationsbereich ergänzen.

Die DE 603 19 550 T2 beschreibt ein Projektions- und Navigationssystem für ein Fahrzeug, das einen Videoprojektor aufweist, der in der Lage ist, Videoinformationen auf eine Projektionsfläche zu übertragen.

Aus der WO 2005/067315 A1 sind ein Verfahren und eine Vorrichtung zum Anzeigen von Informationen in einem Kraftfahrzeug unter Verwendung eines Laserprojektionsdisplays bekannt. Unter anderem ist ein Laserprojektionsdisplay vorgesehen, welches in der Lage ist, Bilder auf einer Windschutzscheibe und/oder einem Armaturenbrett anzuzeigen.

Eine Einrichtung zur Anzeige von Informationen in einem Fahrzeug ist in der DE 202 10 601 U1 beschrieben. Hierzu ist im Bereich eines Armaturenbretts ein Projektionsschirm vorgesehen, der von einer Projektionseinheit beaufschlagt wird.

Im Allgemeinen werden in sogenannten Head-Up-Displays einerseits, also in Vorrichtungen, die Informationen auf die Windschutzscheibe projizieren, sowie in den im Armaturenbrett angeordneten, sogenannten Kombiinstrumenten andererseits eine Vielzahl von Informationen angezeigt. Bei sämtlichen bislang bekannten Lösungen ist es für den Fahrer jedoch schwierig, auf Anhieb den Zusammenhang zwischen den im Kombiinstrument und den auf dem Head-Up-Display angezeigten Informationen herzustellen, zumal verschiedene Informationen häufig doppelt und getrennt angezeigt werden. Eine Integration des Head-Up-Displays in die Gesamtkonzeption des Kraftfahrzeugs ist bislang nicht gelungen.

Es ist daher Aufgabe der vorliegenden Erfindung, eine Vorrichtung zur Anzeige von Informationen in einem Kraftfahrzeug zu schaffen, bei welcher eine Anzeigeeinrichtung Informationen in einem Armaturenbrett und eine weitere Anzeigeeinrichtung Informationen auf einer Windschutzscheibe anzeigt, wobei eine bessere Verständlichkeit der angezeigten Informationen für den Fahrer gegeben sein soll.

Erfindungsgemäß wird diese Aufgabe durch die in Anspruch 1 genannten Merkmale gelöst.

Erfindungsgemäß ergibt sich also eine Vorrichtung zur Anzeige von Informationen, welche aus zwei voneinander im Prinzip vollkommen unabhängigen Anzeigeeinrichtungen besteht, die sich jedoch zu einem Gesamtbild zusammenfügen, so dass die Informationen für einen Benutzer sehr viel einfacher abzulesen und zu verarbeiten sind als dies bei bekannten Lösungen der Fall ist, wenn mehrere Anzeigeeinrichtungen miteinander kombiniert werden. Der Benutzer muss bei der erfindungsgemäßen Lösung nicht zwischen zwei Anzeigeeinrichtungen springen, sondern kann das sehr runige, gleichmäßige Design der erfindungsgemäßen Vorrichtung zur Aufnahme der darin angezeigten Informationen nutzen.

Ein besonderer Vorteil der erfindungsgemäßen Lösung liegt außerdem darin, dass sich eine im Prinzip durchgängige Anzeige ergibt, auf der annähernd beliebige Informationen frei positioniert und in einem gemeinsamen Kontext angezeigt werden können.

Ein besonders guter Übergang zwischen den beiden Anzeigeeinrichtungen ergibt sich dadurch, dass erfindungsgemäß die erste Anzeigeeinrichtung eine gekrümmte Anzeigefläche aufweist, die von einer im Wesentlichen vertikalen Ausrichtung an der der zweiten Anzeigeeinrichtung abgewandten Seite in Richtung der der zweiten Anzeigeeinrichtung zugewandten Seite in eine im Wesentlichen horizontale Ausrichtung übergeht.

Vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine Schnittdarstellung einer ersten Ausführungsform der erfindungsgemäßen Vorrichtung;
- Fig. 2: eine Schnittdarstellung einer zweiten Ausführungsform der erfindungsgemäßen Vorrichtung; und
- Fig. 3: eine Draufsicht auf die erfindungsgemäße Vorrichtung gemäß Fig. 1 oder Fig. 2.

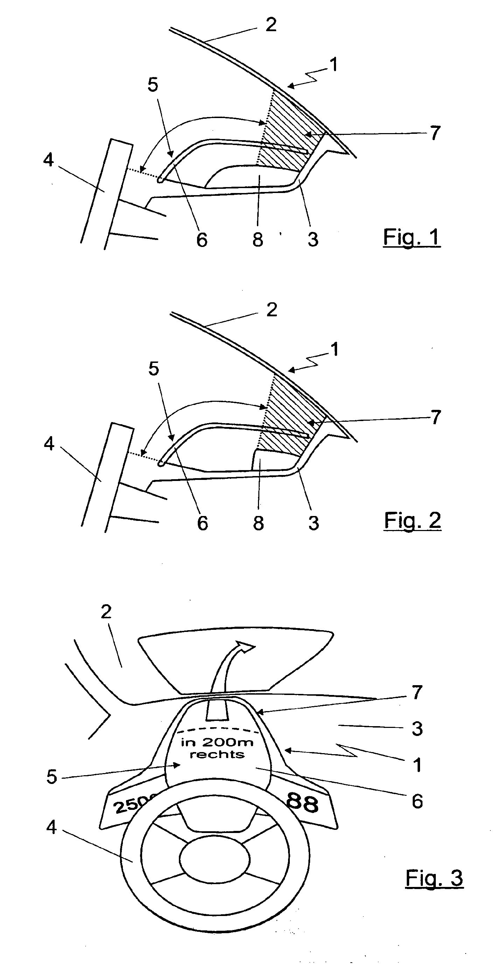

In Fig. 1 ist eine Vorrichtung 1 zur Anzeige von Informationen in einem in seiner Gesamtheit nicht dargestellten Kraftfahrzeug gezeigt. Von dem Kraftfahrzeug sind neben der Vorrichtung 1 eine Windschutzscheibe 2, ein Armaturenbrett 3 und ein Lenkrad 4 dargestellt. Die Vorrichtung 1 weist eine erste Anzeigeeinrichtung 5 auf, die eine in dem Armaturenbrett 3 des Kraftfahrzeugs angeordnete Anzeigefläche 6 aufweist. Des weiteren weist die Vorrichtung 1 eine zweite Anzeigeeinrichtung 7 auf, die eine Projektionseinrichtung 8 aufweist, mittels welcher Informationen auf der Windschutzscheibe 2 des Kraftfahrzeugs angezeigt werden können. Während die erste Anzeigeeinrichtung 5 als sogenanntes Kombiinstrument bezeichnet werden kann, wird die zweite Anzeigeeinrichtung 7 üblicherweise als Head-Up-Display bezeichnet. Selbstverständlich kann sich das auf der Windschutzscheibe 2 angezeigte Bild wie bei bekannten Head-Up-Displays in einiger Entfernung vor dem Kraftfahrzeug fokussieren, wo es im Sichtbereich eines Fahrers des Kraftfahrzeugs liegt.

Bei der Ausführungsform der Vorrichtung 1 gemäß Fig. 1 ist die Projektionseinrichtung 8 auch dafür vorgesehen, Informationen auf der Anzeigefläche 6 der ersten Anzeigeeinrichtung 5 anzuzeigen bzw. auf die Anzeigefläche 6 zu projizieren, so dass die Projektionseinrichtung 8 bei dieser Ausführungsform auch der ersten Anzeigeeinrichtung 5 zuzurechnen ist. Hierbei kann die Projektionseinrichtung 8 in zwei Abschnitte unterteilt sein, von denen ein Abschnitt die erste Anzeigeeinrichtung 5 versorgt, um die Informationen auf der Anzeigefläche 6 anzuzeigen, und der zweite Abschnitt die zweite Anzeigeeinrichtung 7 versorgt, um die Informationen auf der Windschutzscheibe 2 anzuzeigen.

Demgegenüber ist bei der Ausführungsform gemäß Fig. 2 die Projektionseinrichtung 8 lediglich für die zweite Anzeigeeinrichtung 7 zum Projizieren von Informationen auf der Windschutzscheibe 2 vorgesehen, wohingegen die Anzeigefläche 6 der ersten Anzeigeeinrichtung 5 als bilderzeugende, d.h. ohne eine Projektionseinrichtung oder eine ähnliche Einrichtung selbst ein Bild erzeugende, Anzeigefläche ausgebildet ist. Bei dieser Ausführungsform der Anzeigefläche 6 kann also beispielsweise ein LED-, LCD-, Plasma- oder auf andere Art und Weise gebildetes bilderzeugendes Display vorgesehen sein.

Beiden Ausführungsformen gemäß Fig. 1 und Fig. 2 ist gemeinsam, dass die Anzeigefläche 6 der ersten Anzeigeeinrichtung 5 gekrümmt ist und von einer im Wesentlichen vertikalen Ausrichtung an der der zweiten Anzeigeeinrichtung 7 abgewandten Seite, bei der dargestellten Ausführungsform also an der dem Lenkrad 4 zugewandten Seite, in Richtung der der zweiten Anzeigeeinrichtung 7 zugewandten Seite, im dargestellten Ausführungsbeispiel also an der der Windschutzscheibe 2 zugewandten Seite, in eine im Wesentlichen horizontale Ausrichtung übergeht. Die Ausführung der gekrümmten Anzeigenfläche 6 ist sowohl für den Fall möglich, dass es sich um ein bilderzeugendes Display handelt, als auch für den Fall, dass die Projektionseinrichtung 8 auf die Anzeigefläche 6 projiziert. Des weiteren ist auch eine ebene Ausgestaltung der Anzeigeeinrichtung 7 möglich. Von dem Begriff "gekrümmt" ist auch eine Anzeigeeinrichtung 7 umfasst, die zwei im Wesentlichen ebene, mittels eines Radius verbundene Anzeigeflächen aufweist.

In den Figuren 1 und 2 ist des weiteren zu erkennen, dass die Anzeigefläche 6 der ersten Anzeigeeinrichtung 5 sich in den Bereich zwischen der Projektionseinrichtung 8 und der Windschutzscheibe 2 fortsetzt. Um dennoch zu ermöglichen, dass die Projektionseinrichtung 8 Informationen auf die Windschutzscheibe 2 projizieren kann, ist es vorteilhaft, wenn die Anzeigefläche 6 in dem Bereich zwischen der Projektionseinrichtung 8 und der Windschutzscheibe 2 transparent oder halbtransparent ausgeführt ist. Alternativ kann die Anzeigefläche 6 in diesem Bereich zwischen der Projektionseinrichtung 8 und der Windschutzscheibe 2 auch eine Öffnung aufweisen. Die Ausführung als teilweise transparente Anzeigefläche 6 ist aus Designgründen zu bevorzugen, da diese ein bei bestehenden Head-Up-Displays vorhandenes "Loch" in dem Armaturenbrett 3 beseitigt.

In der Darstellung gemäß Fig. 3 ist zu erkennen, dass die zweite Anzeigeeinrichtung 7 mit der Anzeigefläche 6 derart gegenüber der ersten Anzeigeeinrichtung 5 angeordnet ist, dass auf den beiden Anzeigeeinrichtungen 5, 7 zusammenhängende, sich von der ersten Anzeigeeinrichtung 5 zu der zweiten Anzeigeeinrichtung 7 fortsetzende Informationen angezeigt werden. Hierzu sind die beiden Anzeigeeinrichtungen 5, 7 mit einer gemeinsamen Steuereinrichtung verbunden, die diese durchgängige Anzeige ermöglicht. Die zu diesem Zweck erforderliche Steuereinrichtung ist in den Figuren nicht dargestellt, für einen Fachmann ist sie jedoch problemlos nachzuvollziehen. Die Steuereinrichtung kann selbstverständlich sowohl bei der in Fig. 1 als auch bei der in Fig. 2 dargestellten Ausführungsform eingesetzt werden, um die Komponenten der beiden Anzeigeeinrichtungen 5 und 7 auf die gewünschte Art und Weise anzusteuern. Zwar handelt es sich bei den auf der Anzeigefläche 6 einerseits und der Windschutzscheibe 2 andererseits allein schon wegen der Ausgestaltung des Innenraums des Kraftfahrzeugs in diesem Bereich noch immer um getrennte Bilder, es ist jedoch ein nahtloser Übergang zwischen denselben vorhanden.

## Patentansprüche

1. Vorrichtung zur Anzeige von Informationen in einem Kraftfahrzeug, mit einem Armaturenbrett, mit einer ersten Anzeigeeinrichtung, die eine in dem Armaturenbrett angeordnete Anzeigefläche aufweist, mit einer Windschutzscheibe und mit einer zweiten Anzeigeeinrichtung zur Anzeige der Informationen auf der Windschutzscheibe, welche eine Projektionseinrichtung aufweist, wobei die zweite Anzeigeeinrichtung derart gegenüber der ersten Anzeigeeinrichtung angeordnet und die beiden Anzeigeeinrichtungen derart mit einer gemeinsamen Steuereinrichtung verbunden sind, dass auf den beiden Anzeigeeinrichtungen zusammenhängende, sich von der ersten Anzeigeeinrichtung zu der zweiten Anzeigeeinrichtung fortsetzende Informationen anzeigbar sind,
**dadurch gekennzeichnet, dass**
die erste Anzeigeeinrichtung (5) eine gekrümmte Anzeigefläche (6) aufweist, die von einer im Wesentlichen vertikalen Ausrichtung an der der zweiten Anzeigeeinrichtung (7) abgewandten Seite in Richtung der der zweiten Anzeigeeinrichtung (7) zugewandten Seite in eine im Wesentlichen horizontale Ausrichtung übergeht.

2. Vorrichtung nach Anspruch 1,
**dadurch gekennzeichnet, dass**
die erste Anzeigeeinrichtung (5) eine Projektionseinrichtung (8) zur Projektion von Informationen auf der Anzeigefläche (6) aufweist.

3. Vorrichtung nach Anspruch 2,
**dadurch gekennzeichnet, dass**
die Projektionseinrichtung (8) der zweiten Anzeigeeinrichtung (7) die Projektionseinrichtung der ersten Anzeigeeinrichtung (5) bildet.

4. Vorrichtung nach Anspruch 1,
**dadurch gekennzeichnet, dass**
die Anzeigefläche (6) der ersten Anzeigeeinrichtung (5) bilderzeugend ausgebildet ist.

5. Vorrichtung nach einem der Ansprüche 1 bis 4,
**dadurch gekennzeichnet, dass**
die Anzeigefläche (6) der ersten Anzeigeeinrichtung (5) sich in dem Bereich zwischen der Projektionseinrichtung (8) der zweiten Anzeigeeinrichtung (7) und der Windschutzscheibe (2) fortsetzt.

6. Vorrichtung nach Anspruch 5,
**dadurch gekennzeichnet, dass**
die Anzeigefläche (6) der ersten Anzeigeeinrichtung (5) in dem Bereich zwischen der Projektionseinrichtung (8) der zweiten Anzeigeeinrichtung (7) und der Windschutzscheibe (2) transparent oder halbtransparent ausgebildet ist.

7. Vorrichtung nach Anspruch 5,
**dadurch gekennzeichnet, dass**
die Anzeigefläche (6) der ersten Anzeigeeinrichtung (5) in dem Bereich zwischen der Projektionseinrichtung (8) der zweiten Anzeigeeinrichtung (7) und der Windschutzscheibe (2) eine Öffnung aufweist.

## Claims

1. Apparatus for displaying information in a motor vehicle having a dashboard, comprising a first display device which has a display surface arranged in the dashboard, comprising a windscreen and comprising a second display device for displaying the information on the windscreen, which device comprises a projection device, the second display device being arranged relative to the first display device and the two display devices being connected to a common control device such that continuous information which is passed from the first display device to the second display device can be displayed on the two display devices, **characterised in that** the first display device (5) has a curved display surface (6) which transitions from a substantially vertical orientation on the side facing away from the second display device (7), towards the side facing the second display device (7), into a substantially horizontal orientation.

2. Apparatus according to claim 1, **characterised in that** the first display device (5) comprises a projection device (8) for projecting information onto the display surface (6).

3. Apparatus according to claim 2, **characterised in that** the projection device (8) of the second display device (7) forms the projection device of the first display device (5).

4. Apparatus according to claim 1, **characterised in that** the display surface (6) of the first display device (5) is image-generating.

5. Apparatus according to any of claims 1 to 4, **characterised in that** the display surface (6) of the first display device (5) continues in the region between the projection device (8) of the second display device (7) and the windscreen (2).

6. Apparatus according to claim 5, **characterised in that** the display surface (6) of the first display device (5) is transparent or semi-transparent in the region between the projection device (8) of the second display device (7) and the windscreen (2).

7. Apparatus according to claim 5, **characterised in that** the display surface (6) of the first display device (5) has an opening in the region between the projection device (8) of the second display device (7) and the windscreen (2).

## Revendications

1. Dispositif d'affichage d'informations dans un véhicule à moteur, comprenant un tableau de bord, un premier dispositif d'affichage, qui présente une surface d'affichage aménagée dans le tableau de bord, un pare-brise et un second dispositif d'affichage pour afficher des informations sur la pare-brise, qui présente un dispositif de projection, dans lequel le second dispositif d'affichage est agencé vis-à-vis du premier dispositif d'affichage et les deux dispositifs d'affichage liés par un dispositif de commande commun en sorte que des informations contiguës puissent être affichées sur les deux dispositifs d'affichage par prolongement du premier dispositif d'affichage au second dispositif d'affichage,
**caractérisé en ce que** :
le premier dispositif d'affichage (5) présente une surface d'affichage courbe (6) qui passe d'une orientation sensiblement verticale, du côté opposé au second dispositif d'affichage (7) dans la direction du côté tourné vers le second dispositif d'affichage, à une orientation sensiblement horizontale.

2. Dispositif selon la revendication 1,
**caractérisé en ce que** :
le premier dispositif d'affichage (5) présente un dispositif de projection (8) pour la projection d'informations sur la surface d'affichage (6).

3. Dispositif selon la revendication 2,
**caractérisé en ce que** :
le dispositif de projection (8) du second dispositif d'affichage (7) forme le dispositif de projection du premier dispositif d'affichage (5).

4. Dispositif selon la revendication 1,
**caractérisé en ce que** :
la surface d'affichage (6) du premier dispositif d'affichage (5) est conçu pour représenter des images.

5. Dispositif selon l'une quelconque des revendications 1 à 4,
**caractérisé en ce que** :
la surface d'affichage (6) du premier dispositif d'affichage (5) se prolonge dans la zone comprise entre le dispositif de projection (8) du second dispositif d'affichage (7) et le pare-brise (2).

6. Dispositif selon la revendication 5,
**caractérisé en ce que** :
la surface d'affichage (6) du premier dispositif d'affichage (5) se présente sous une forme transparente ou semi-transparente dans la zone comprise entre le dispositif de projection (8) du second dispositif d'affichage (7) et le pare-brise (2).

7. Dispositif selon la revendication 5,
**caractérisé en ce que** :
la surface d'affichage (6) du premier dispositif d'affichage (5) présente une ouverture dans la zone comprise entre le dispositif de projection (8) du second dispositif d'affichage (7) et le pare-brise (2).
